Europäisches Patentamt

(19) European Patent Office

Office européen des brevets

(11) Publication number: **0 093 408**

**A1**

(12) # EUROPEAN PATENT APPLICATION

(21) Application number: 83104157.9

(22) Date of filing: 28.04.83

(51) Int. Cl.³: **H 05 B 39/02**

(30) Priority: 29.04.82 US 372978
01.03.83 US 470913

(43) Date of publication of application:
09.11.83 Bulletin 83/45

(84) Designated Contracting States:
CH DE FR GB IT LI NL SE

(71) Applicant: Potter, Bronson
RFD 1
Greenville New Hampshire 03048(US)

(72) Inventor: Potter, Bronson
RFD 1
Greenville New Hampshire 03048(US)

(74) Representative: Heidrich, Udo
Patentanwalt & Rechtsanwalt Dipl.-Phys. Dr. jur. U.
Heidrich Franziskanerstrasse 30
D-8000 München 80(DE)

(54) Brightness control device.

(57) An energy-saving variable brightness control for e.g. a conventional electric lamp which, by use of reliable electronic circuits requiring no special wiring steps by the user, ensures that a lamp always comes on dim when the conventional switch is first activated, and only comes on bright if the switch is turned off and on again, or otherwise as desired by the designer. An electronic fading memory element is employed, which maintains a first, "recently on" state for a few seconds after power to the lamp has been turned off, then enters a second "long off" state. The power applied to the lamp is made dependent upon the state of this electronic fading memory element. In preferred embodiments a pair of electronic subcircuits is employed, one of which has a rectifier which applies a first half-wave of alternating current to the lamp, the other of which is normally in a condition which prevents the second half-wave of the alternating current from reaching the lamp when the lamp is switched on, but provides a time interval beginning when the lamp is switched off, during which the second subcircuit is in a condition to apply at least part of the second half-wave of the alternating current to the light in response to a further switching on of the lamp. In certain preferred embodiments the electronic fading memory element comprises a capacitor or thermistor which requires no external source of power after the lighting circuit is switched off.

FIG I

## Background of the Invention

This invention relates to variable brightness control of electric lamps.

Typical devices that are commercially available must be permanently wired into the electric lamp circuit. There also have been proposals to achieve operation not dependent upon special wiring, but these have not been practical or have had other drawbacks.

## Summary of the Invention

The invention is an energy saving, variable brightness control, in other words, a variable dimmer, for an electric lamp. By use of a simple and reliable electronic circuit that requires no special wiring steps, a lamp can always come on dim when the conventional power switch is first activated, and only come on bright if the switch is turned off and on again, or otherwise as desired by the designer.

The invention features an electronic fading memory means that has a first electrical state when the switch is moved from "on" to "off" position, and changes to a second electrical state when the switch has been in its "off" position for longer than a predetermined delay period. A power circuit, adapted to energize the electric lamp at levels corresponding to at least two different brightness levels, is responsive to the electrical state of the electronic fading memory means to apply the first or second power level to the lamp when the switch is thrown to its "on" position.

In preferred embodiments the fading memory means comprises a capacitor with the first and second electrical states corresponding respectively to the capacitor being charged and discharged, or the fading memory means comprises a thermistor, with the first and second electrical states corresponding to different resistance values of the thermistor, that corresponds to different temperatures of the thermistor.

In another aspect, the invention features a rectifier arrangement powered by alternating current, having a first electronic subcircuit to apply a first half-wave of the alternating current to the lamp, and a second electronic subcircuit which normally prevents the second half-wave from reaching the lamp, when the lamp is switched on. The second electronic subcircuit is reflexive, arranged to provide a predetermined time interval beginning when the lamp is switched off, during which it is in an electrical condition that enables it to apply at least a part of the second half-wave to the lamp in response to a further switching on of the lamp. In preferred embodiments this second subcircuit comprises an SCR or the like which is shunted or not, at the time power is turned back on, depending upon the state of the fading memory means. From another point of view, the invention features a subcircuit that has four states that depend on the switching of the lamp: a first state, that occurs when the lamp has been off for at least the predetermined time interval, in which the subcircuit is in an electrical condition to enable it to enter the second state when the lamp is switched on; a second state, triggered only from the first state by the lamp being turned on, in which the second subcircuit prevents the second half-wave of the alternating current from reaching the lamp; a third state, triggered only by the lamp being turned off and continuing thereafter only during the predetermined time interval, in which the second subcircuit resides in an electrical condition that enables it to enter a fourth state when the lamp is switched on; and the fourth state, triggered

only from the third state by the lamp being turned on, in which the second subcircuit applies the other half-wave to the lamp. By this arrangement, after the lamp is normally off, i.e. for a period extending beyond the predetermined time interval, switching on of the lamp always causes the lamp to come on dim at an energy-saving level, but the lamp can be reliably switched to bright at the user's choice merely by switching the lamp off and within the time interval switching the lamp back on.

By requiring the lamp to be first lit dimly, the dimmer circuit can automatically teach and compel energy saving, except when the user deliberately decides to use bright illumination; the dimmer circuit can be added easily and quickly at any point in the circuit; the lighting power is not wasted by resistance components in the power delivery parts of the dimmer circuit; the components are not temperature sensitive; and the time interval is easily subject to design change.

Other features and advantages will be apparent from the claims.

### Description of Preferred Embodiments

Drawings

Fig. 1 is a circuit diagram of a preferred embodiment which employs a silicon-controlled rectifier (SCR), Fig. 1a is a drawing of a substitute emitter-follower circuit for the SCR of Fig. 1 and Fig. 1b is a substitute emitter-follower configuration using a triac as a substitute for the SCR of Fig. 1;

Fig. 2 is a circuit diagram of a preferred embodiment employing a logic chip; Fig. 2a is an embodiment employing a logic chip which can achieve three or more levels of illumination; Fig. 2b is an embodiment similar to Fig. 2 which employs both a logic chip and a full-wave bridge rectifier;
Fig. 2c is an embodiment similar to Fig. 2a which employs a full-wave bridge rectifier;

Fig. 3 is an embodiment which employs a thermistor in the reflexive portion of the circuit while Fig. 3a is an alternative to Fig. 3 having the advantage of employing a lower mass thermistor;

Fig. 4 is a circuit diagram of an embodiment employing two thermistors and a logic chip;

Fig. 5 is a circuit diagram of an embodiment employing an SCR in the reflexive portion of the circuit; and

Figs. 6 and 6A are diagrams of alternative circuits which allow dim to immediately follow bright.

Structure and Operation

- In important-embodiments of the invention, some of which are now to be described in detail, the reflex circuit is connected as a dimmer circuit for an incandescent lamp. All circuit values given are approximate.

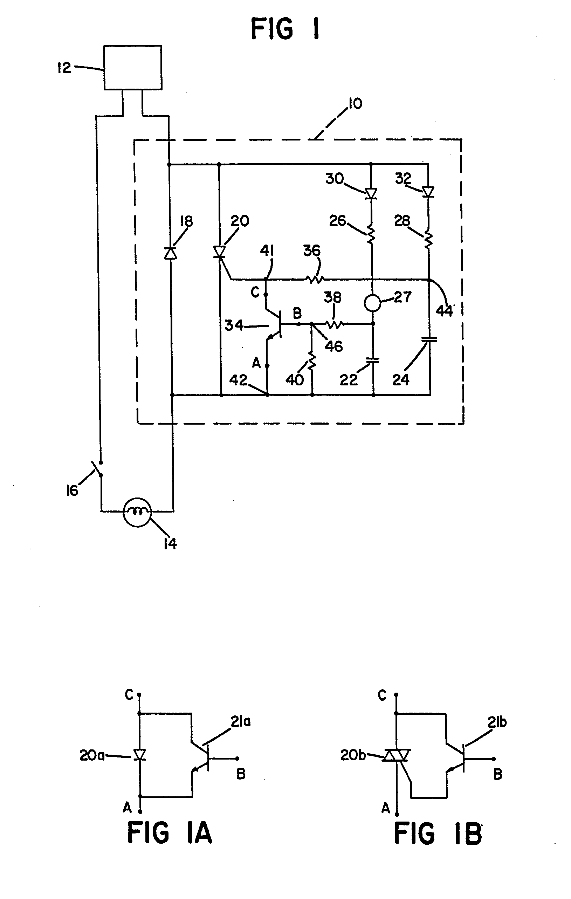

Referring to Fig. 1, reflex dimmer circuit 10 is inserted in one line of a conventional 110-volt AC lighting circuit having a power source 12, a lamp in the form of an incandescent light bulb 14 and an on-off switch 16, connected as shown.

The dimmer circuit provides two paths for power to reach the bulb. One path, through a rectifier 18 is always connected and passes one half-wave of the AC current as long as the switch is on. The second path, through silicon controlled rectifier (SCR) 20, is either connected or disconnected depending upon the state of the other elements of the dimmer circuit. When rectifier 20 is conductive it passes the other half-wave of the AC current while the switch 16 is on. When only rectifier 18 (but not rectifier 20) is conductive, light bulb 12 is dimly illuminated by half-wave power. When both rectifiers 18, 20 are conductive, bulb 12 is brightly illuminated by full-wave power.

The silicon controlled rectifier 20 is controlled by circuitry consisting of a pair of capacitors 22, 24, respectively, connected in series with a pair of resistors 26, 28 and a pair of diodes 30, 32, as shown. Transistor 34 is connected with the resistors 36, 38 and 40 as shown. Light emitting diode (LED) 27 is wired in series with resistor 26.

In Fig. 1, the components of one embodiment have the following specfications:

| Component | |
|---|---|
| rectifier 18 | 400 volts PIV, 1 amp |
| SCR 20 | 400 volts PIV |
| transistor 34 | Standard PIV 200 volts, hfe 100, power 1 watt |
| diode 30 | Small signal diode |
| diode 32 | Small signal diode |
| resistor 26 | 8.5 K ohm |
| resistor 28 | 2 K ohm |
| resistor 36 | 2 K ohm |
| resistor 38 | 1.3 K ohm |
| resistor 40 | 1.3 K ohm |
| capacitor 22 | 0.2 microfarads, 20 v. |
| capacitor 24 | 20 microfarads, 100 v. |

When switch 16 is first turned on, the light bulb is illuminated only dimly by half-wave AC power passed by rectifier 18. The silicon controlled rectifier 20 stays "off" (and does not pass the other half-wave) because current through diode 30 and resistors 26, 38 immediately turns on the transistor 34, establishing a current drain path between points 41 and 42. LED 27 is illuminated to indicate that the bulb is dimly illuminated and energy is being saved. The current drain path prevents any current through resistor 36 from triggering the SCR 20. Capacitor 22 quickly charges and keeps the transistor 34 on even during the half-waves when diode 30 is not passing any current through to the base of the transistor. Capacitor 24 also charges up (quickly, but less so than capacitor 22), establishing a voltage at point 44. As long as the switch remains on, the dimmer circuit remains stably in the described state and the light bulb is illuminated dimly.

When the switch is turned off, power to the light bulb and the dimmer circuit is cut off and capacitors 22, 24 begin to discharge, capacitor 22 discharging more quickly than capacitor 24. As the voltage at point 46 drops, transistor 34 quickly shuts off, establishing a high voltage at 41 (no longer shunted by the transistor) which puts the SCR 20 in a conductive state (although, because the switch 16 is off, current is not conducted). As capacitor 24 discharges, the voltage at 41 drops until, after a certain predetermined time interval passes, the SCR 20 is no longer in its conductive state and the dimmer circuit has effectively returned to its normal state before the switch was first turned on.

Thus, capacitor 24 serves as a "fading memory element", storing for the predetermined time interval the information that the switch 16 was recently on despite the fact that power to the circuit has been entirely switched off.

If the switch is not turned on again until after the predetermined time interval has passed, the light bulb will go on dim again, and continue to stay dim as described above. However, if the switch is turned on again before the time interval has passed, one half-wave of current will immediately pass through the SCR 20 which is in the conductive state (because capacitor 24 has not discharged). Since the other half-wave of current will still pass through rectifier 18, the two half-waves together will illuminate the light bulb brightly. (LED 27 is off, indicating that the bulb is burning brightly.) No other power is available through diode 30 to turn on the transistor 34 so the circuit remains stably in the described state (with the light bulb illuminated brightly) until switch 16 is turned off.

Modifications are readily possible to Fig. 1.

For example, a power transistor can be used in place of the SCR 20, the choice depending upon the cost and performance characteristics available at the time of choice.

An emitter-follower configuration can be employed, which is shown in Fig. 1a. Here, SCR 20 is removed and the configuration of Fig. 1a is connected at corresponding points A, B and C of Fig. 1. The emitter of transistor 21a controls SCR 20a while the collector is connected across the SCR and the base is connected to point 46 in the circuit. The current at the base is multiplied by the Beta (typical value: 100) of the transistor, and appears thus amplified at the emitter. Due to this gain, the value of the capacitance required for capacitors 22 and 24 in this circuit (especially important, the value of power capacitor 24) are correspondingly reduced from that of Fig. 1. This can save cost, reduce size and make possible the use of high temperature-resistant capacitors or the use of semiconductor chip technology.

As before, in Fig. 1a, a transistor can be substituted for the SCR 20a.

In Fig. 1b, another emitter-follower configuration; half of a triac 20b is controlled by transistor 21b with similar advantages. This enables use of triacs which are common in the light dimming industry.

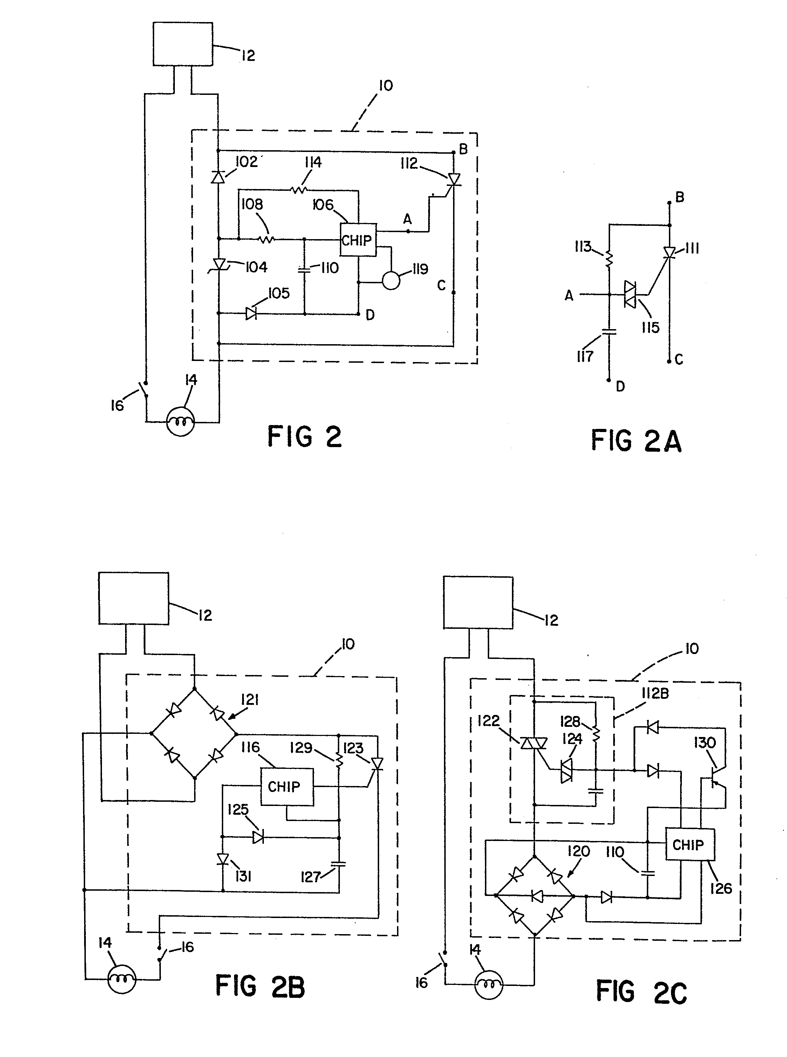

Referring to Fig. 2, in another embodiment, in a first subcircuit, in addition to a power rectifying diode 102, zener diode 104 is provided in series to supply logic chip 106 with power, in conjunction with capacitor 110.

When the lamp is switched on, capacitor 110 charges. The state of charge of capacitor 110 is the instruction to logic chip 106 in addition to the "going on" signal derived from the voltage drop across resistor 108.

Normally, after the circuit has been idle, when the lamp 14 is switched on, there is no charge on the capacitor 110. The logic chip 106 (triggered by the "going on" signal) recognizes this state, and applies no signal to the gate of SCR 112, hence no current flows through the SCR. At the same time chip 106 can energize light emitting diode 119 to signify that the unit is in its power saving mode.

On the other hand, if lamp 14 is switched on, then off, a charge remains on capacitor 110, which dissipates over a predetermined time interval, preferably of the order of 3-5 seconds, and thus capacitor 110 serves as a fading memory for the fact that switch 16 was recently on. If during its memory interval, the lamp is switched on again, the logic chip, upon the application of the "going on" signal, senses the capacitor 110, and recognizing the "recently on" charged condition of the capacitor, applies a gating signal to SCR 112, causing SCR 112 to conduct the other half wave. LED 119 is turned off to indicate that the lamp is brightly illuminated. Typical values may be:

|  |  |
|---|---|
| diode 102 | 600 PIV, 1.5 amperes |
| zener diode 104 | 6 volts at 10 watts |
| diode 105 | small signal diode |
| chip 106 | conventional logic chip |
| resistor 108 | 1 ohm |
| capacitor 110 | 1,000 microfarads at 10 volts |
| current limiting resistor 114 | 50 K ohm |

Figure 2a is a modification of Fig. 2 for enabling four predetermined levels of brightness to be achieved. The circuit of Fig. 2A would be substituted for SCR 112 in Fig. 2 with points A, B, C, D of Fig. 2A connected to corresponding points A, B, C, D of Fig. 2.

In Fig. 2A, SCR 112 of Fig. 2 is replaced by SCR 111, a conventional diac 115 (available from General Electric Company), resistor 113, and capacitor 117. Current through resistor 113 causes diac 115 to fire, which in turn controls SCR 111. The point in each half-cycle in which diac 115 fires depends upon the point at which current from resistor 113 is sufficiently high. ,

According to this embodiment, resistor 113 has a constant value, e.g. 5 k ohm, to enable sufficient current to flow to the diac to cause it to fire immediately when each half cycle begins. The logic chip is connected between resistor 113 and diac 115 and adapted to provide a current drain, depending upon the state of the logic chip.

When the logic chip 106 receives a "going on" signal from resistor 108 and senses no charge on capacitor 110, it grounds point B, diac 115 does not fire and SCR 111 does not conduct over the full half cycle. In this respect it is the same as Fig. 2, causing the lamp to come on dim, at half power, when the switch is activated. .  -

The logic chip, however, contains a conventional counter that counts the number of times in sequence the switch 16 is activated (i.e. the number of times it receives a "going on" signal) while a charge is still present on capacitor 110. At initial switching "on" of the circuit, since there is no charge on the capacitor, a zero count is registered. If the user turns the switch off and quickly on again, count 1 is registered. Count 1 enables (e.g. by control of a suitable ramp generator) a predetermined value of current to flow from the resistor 113 to fire the diac 115, e.g. to cause diac to fire at the 60° point of the half cycle. If the user wishes a higher light intensity, he turns the switch off and quickly on again. The logic chip count goes to 2 and reduces the current drain to a discrete next level, to enable a second predetermined higher value of current to flow to the diac, e.g. to cause it to fire at the 30° point of the half cycle. The third count can then permit the full current to reach the diac for full brightness of the lamp. The counter may be designed to stay in the "count three" state for any subsequent rapid switchings of the switch - keeping the light intensity at the highest level, or a higher count may be used to restore the full drain of the current and the lamp to half power, with the count returned to zero.

The capacitor may have a discharge time of the order of 3 to 5 seconds. Whenever that time is exceeded between switch "off" and "on" again, the counter means will register a zero count and the lamp will come on dim.

Fig. 2b illustrates a multilevel system, again using a logic chip and counter 116, but employing a full wave bridge rectifier 121 to achieve rectified full wave current through the lamp. A silicon controlled rectifier 123 then controls the power applied to the lamp 14. The zener diode 125 is provided to power and protect the logic chip. The chip responds to the presence or absence of charge on capacitor 127 to increment the counter means and thereby control the SCR to allow more power through, in discrete, predetermined steps, depending upon the state of the count. Circuit values for Fig. 2b may be:

| full wave bridge rectifier 121 | 2 amp 400 piv. |
| resistor 129 | 5 k ohm |
| SCR 123 | 2 amp 400 piv. |
| capacitor 127 | 1,000 microfarads at 10 volts |
| zener diode 123 | 6 volt |
| diode · 131 | small signal diode |

Referring to Fig. 2c, in another embodiment full wave bridge rectifier 120 supplies the power to logic chip 126. A dimmer control·triac 122 is incorporated in a circuit 112b shown outlined by dashed lines, similar to the circuit of Fig. 2a. The triac 122 is fired by diac 124, at a point in the half -waves determined by the current reaching the diac. Current through the resistor 128 is drained away at levels determined by the logic chip 126. The positive current is taken by the chip in the manner described with respect to Fig. 2a. The negative current is taken by phase reversal PNP transistor 130 also controlled by the logic chip. Thus, both sides of the AC wave to the lamp are controlled. The logic chip in its reflex action operates the same as does Fig. 2a, i.e. when the lamp is first turned on, the chip is programmed to drain most of the current through resistor 128 and the lamp comes on very dim. Turning the power off and on again, the capacitor 110 remembers that the power has recently been on and instructs the logic chip to count up one. The logic chip thus can count all the way up to full brightness and then revert to the dim stage again. Full-wave current reaches lamp 14 through rectifier 120 at a level controlled by triac 122.

As an alternative to the capacitor of the preceding figures, the fading memory element 200 of Fig. 2c can be implemented by a clock, count down circuit and comparator incorporated in the logic chip, with an auxiliary power source provided. This fading memory element can be initiated each time power of the lighting circuit is turned off. During its count down period it signals state 1 to the logic chip, denoting that the circuit was recently on, and enabling the chip to energize the lamp at an increased intensity. After it has counted out, e.g. 3 seconds, it ceases to count and the circuit returns to its "long off" state, state 2.

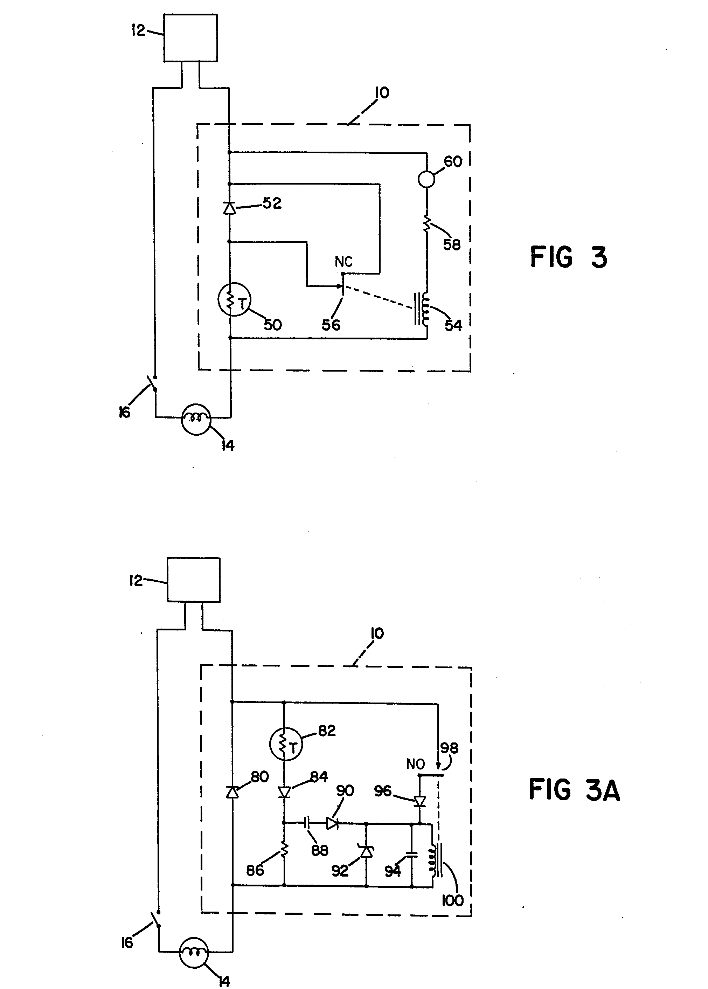

Referring to Fig. 3, in another embodiment, reflex dimmer circuit 10 has negative temperature coefficient thermistor 50 (having e.g., 100 ohms resistance at room temperature and approximately 2 ohms resistance at 150°F.), diode 52 (2 amp, 600 volt PIV), relay coil 54 (operating with normally closed contacts 56), resistor 58 (190 ohms, 1/8 watt) and light emitting diode (LED) 60 for indicating the state of the controller, all connected as shown.

The thermistor here serves as the electronic fading memory element. In operation, when switch 16 is first turned on, current flows through thermistor 50 and through normally closed contacts 56 (bypassing diode 52); the relatively high resistance of thermistor 50 causes a voltage drop across relay coil 54, immediately causing contacts 56 to be opened. Diode 52 is then no longer bypassed and the current flowing through it is rectified so that only half of the 60-cycle wave (and therefore half the power) is passed through the circuit to light 14. The current passing through thermistor 50 quickly warms it (in about 1 second), causing its resistance to drop to its low value, producing a rise in the current delivered to light bulb 14 which is slower (and therefore less damaging to the filament of bulb 14) than the rapid current rise which is produced when power is switched on in a conventional circuit. The half-wave power which reaches bulb 14 causes it to be

- 13 -

lighted dimly. As long as half-wave current is passing through diode 52, a small current is also passing through the high resistance (e.g., 100 ohms) relay coil 54 which continues to be activated, keeping contacts 56 open.

The current which activates relay coil 54 also passes through and illuminates LED 60, giving an indication that bulb 14 is dim.

Light bulb 14 continues to burn dimly until switch 16 is turned off, causing contacts 56 to close. If switch 14 is turned on again before thermistor 52 has cooled down, the resistance of thermistor 52 is still low and the voltage drop is insufficient to activate relay coil 54. Full wave current then passes through thermistor 50, through contacts 56 (bypassing diode 52) and is applied at full wave (and full power) to light bulb 14, which is then lighted brightly. LED 60 is off, indicating a brightly burning bulb 14. If the delay between the turning off and the turning on of switch 16 is long enough to enable thermistor 52 to cool off, the further turning on of switch 16 will only cause bulb 14 to burn dimly, in the same manner explained before (with respect to the first time switch 16 was turned on).

In other embodiments, with suitable change in the circuit, a normally open switch can be employed, again using a thermistor as a fading memory element. Referring to Fig. 3a, diodes 80, 84, 90, 96, capacitors 88, 94, thermistor 82 (smaller than in Fig. 3), zener diode 92, and relay 100 (with normally open contacts 98) are connected as shown. When switch 16 is first turned on, thermistor 82 allows current to flow through diode 84 and resistance 86. As the thermistor warms up, the change in current is so slow as to be insufficient to produce enough current through capacitance 88 to fire the relay. Now with a hot thermistor, the machine turned off and back on again, the rate of change of current through capacitance 88 is sufficient to fire relay 100 and when the contacts close, the half wave current which is taken across diode 80 now flows through the relay winding and is limited by zener diode 82. Thus, in one condition we have half wave current going through diode 80, the other half wave current coming through contacts 98 and diode 96 through the relay winding and back to the lamp to supply the other half wave current.

An AC relay is employed here. Capacitor 94 provides filtering so that the circuit does not hum. The zener diode prevents wasting too much voltage across the relay. A substantial amount of voltage, e.g., 12 volts, must be maintained across the relay to keep it energized.

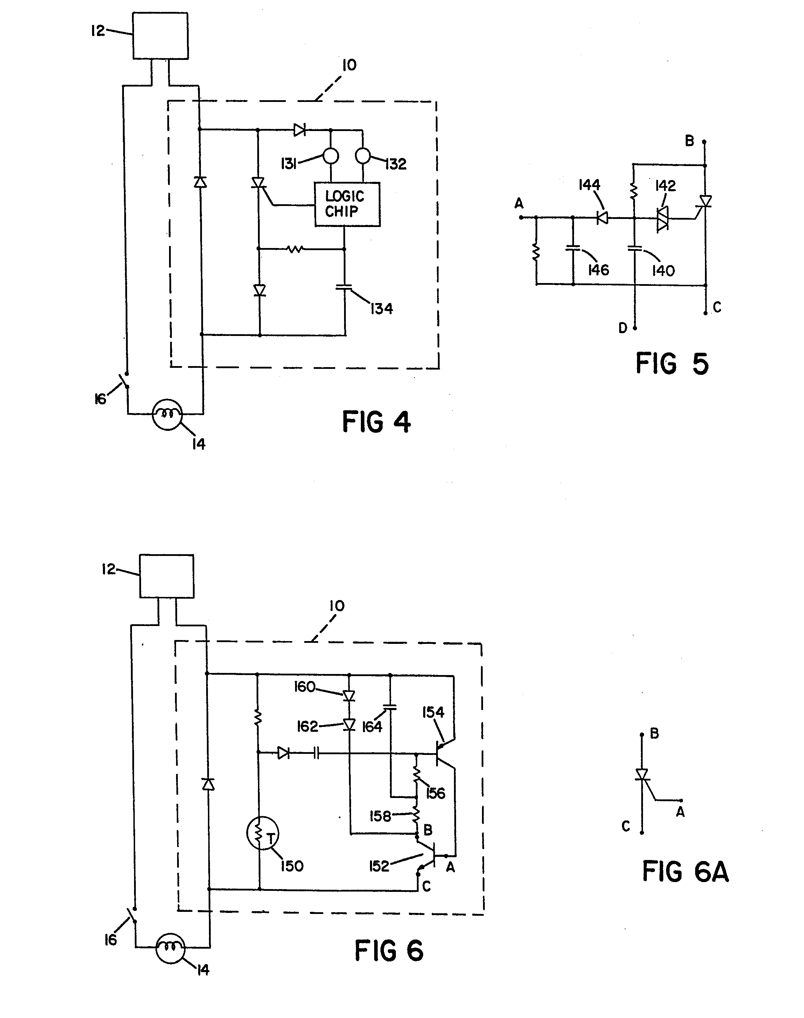

Referring to Fig. 4, a general case for the reflex logic chip is shown, having thermistors 131, 132 of different thermal speeds so that the information that the device has been on and has now been off for an instant and is ready to switch on to bright can be extracted from comparison of the currents through a cool (fast) small thermistor and a warm (slow) large thermistor. Capacitor 134 will not let the chip switch until discharged, which solves the problem of the larger thermistor cooling down only slowly when lamp 14 is bright. Capacitor 134 can be a very small ceramic capacitor.

In the preceding embodiments either a capacitor or a thermistor has been employed as a fading memory element. Other arrangements are possible. For instance, that of Fig. 5, which can be substituted for the SCR in Fig. 2, by connecting the A, B, C, D points of Fig. 5 to the A, B, C, D points of Fig. 2. In Fig. 5, instead of allowing the capacitor 140 (0.1 microfarad) to charge up and fire diac 142, current is drained through diode 144 to a 20 microfarad, 20 volt capacitor 146.

Diode 144 is used so that the voltage across capacitor does not appear across the diac, causing it to blow out. The "on" time of the diac is 50K times 50 microfarads. About 20-25 volts are achieved across capacitor 140, sufficient voltage appears across the capacitor 140 to fire the diac, and the delay is ended.

In Fig. 6, transistors 152, 154 form a negative resistance configuration such that a tiny current drawn by transistor 152 causes the circuit to become fully saturated, so the circuit is either fully on or fully off. Resistors 156, 158 protect transistor 154 by reducing the current flow from transistor 152 to the base of transistor 154, with the rest of the current flow shunted through diodes 160, 162. Capacitor 164 keeps a sufficient voltage across transistor 154 to keep the circuit saturated even during the "off" half-cycles of AC current.

When the circuit is first turned on, thermistor 150 is cold and there is insufficient current to trigger Q1. After thermistor 150 warms up, if the lamp is turned off and back on the lower resistance of warm thermistor 150 causes current through capacitor 166 to switch on transistor 154.

During the bright phase, thermistor 150 cools down, i.e. the fading memory element resets to its original state. Thus, unlike Fig. 1, the circuit can be switched back on to dim, after being on bright for awhile, with no prolonged waiting interval. PNP transistor 152 receives the full line voltage.

Fig. 6a illustrates an SCR 154 that can be substituted for the transistor of Fig. 6 by connection of the respective terminals A, B and C.

The dimmer circuits, with suitable adaption, can either be contained in a box which plugs into a conventional electrical wall outlet and receives the lamp plug; housed in a
disk to be dropped into the bottom of a conventional light
socket before the light bulb is screwed in; contained in an
adaptor which has a socket end to receive the plug end of the
light bulb and a plug end to be screwed into a conventional
light socket; or otherwise included in the bulb or the lighting
circuit. It can be arranged to be included in one or across
both lines of a conventional AC circuit.

*Claims*

1. A variable brightness controller for an electric lamp operated by an "on", "off" switch,

characterized in that said controller comprises

an electronic fading memory means adapted and arranged to have a first electrical state when said switch is moved from "on" to "off" position, and to change to a second electrical state when said switch has been in its "off" position for longer than a predetermined delay period,

a power circuit for providing power to said electric lamp at levels corresponding to at least two different brightness levels of the lamp when said switch is thrown to said "on" position,

said power circuit being responsive to the electrical state of said electronic fading memory means to apply a first or second power level to said lamp depending upon the state of said electronic fading memory means when said switch is thrown to said "on" position.

2. The variable brightness controller of claim 1 adapted for use in an AC power circuit,

characterized in that

when said switch is thrown to said "on" position, said power circuit is adapted to provide half-wave power to said lamp if said fading memory means is in a first electrical state, and full-wave AC power to said lamp if said fading memory means is in a second electrical state.

3. The variable brightness controller of claim 1

characterized in that

said fading memory element comprises a capacitor, said first and second electrical states coresponding respectively to said capacitor being charged and discharged.

4. The variable brightness controller of claim 1

characterized in that

said fading memory element comprises a thermistor.

5. The variable brightness controller of claim 1, 2, 3 or 4

characterized in that

said power circuit is responsive to the past sequence of states of said fading memory means to vary the brightness of said lamp through three or more levels.

6. The variable brightness controller of claim 1, 2, 3 or 4

characterized in that

said power circuit comprises

a memory and logic device for storing and sensing the past sequence of states of said fading memory means, and

a current regulator for controlling said power to said electric lamp in response to said logic device, said regulator adapted to deliver selected proportions of the waveform of an AC current to said lamp corresponding to said past sequence of states.

7.   The variable brightness controller of claim 6

characterized in that

said current regulator comprises a controlled rectifier.


8.   A brightness control device for a switch-operated electric lamp powered by alternating current,

· characterized in that said device comprises

a first electronic subcircuit comprising a rectifying element connected to apply a first half-wave of said alternating current to said lamp,

a second electronic subcircuit normally adapted to reside in an electrical condition that enables it to prevent said second half-wave from reaching said lamp, when said lamp is switched on,

said second electronic subcircuit being reflexive, constructed and arranged to provide a predetermined time interval beginning when said lamp is switched off, during which said second electronic subcircuit resides in an electrical condition that enables it to apply at least a part of the second half-wave of said alternating current to said lamp in response to a further switching on of said lamp.

9.   A variable brightness control device for a switch-operated electric lamp powered by alternating current,

characterized in that said device comprises

a first electronic subcircuit comprising a rectifying element connected to apply a first half-wave of said alternating current to said lamp whenever said lamp is on, and

a second electronic subcircuit normally adapted to reside in an electrical condition that enables it to prevent said second half-wave from reaching said lamp when said lamp is switched on,

said second electronic subcircuit being reflexive and bi-stable, constructed and arranged to provide a predetermined time interval beginning when said lamp is switched off, during which said second electronic subcircuit resides in an electrical condition that enables it to apply the second half-wave of said alternating current to said lamp, in response to a further switching on of said lamp,

said bi-stable circuit comprising a controlled rectifier means connected to apply at least part of said second half-wave to said lamp or to prevent said second half-wave from reaching said lamp, depending on the electrical condition of said second electronic subcircuit.

10. In a brightness control device for an electric lamp powered by alternating current, wherein said device responds to a first switching on of said lamp at a first power level by assuming a condition such that, when said lamp is switched off and then soon switched on again, said lamp is powered at a different level from said first power level,

characterized in that said device comprises

a pair of electronic subcircuits for applying respective half-waves of said alternating current to said lamp,

the first subcircuit comprising a rectifying element connected to apply a first half-wave of said alternating current to said lamp whenever said lamp is on, and

the second subcircuit being reflexive, constructed and arranged to have four states that depend on the switching of said lamp,

a first state, that occurs when said lamp has been off for at least a predetermined time interval, in which said subcircuit resides in an electrical condition that enables it to enter the second state when said lamp is switched on,

a second state, triggered only from said first state by said lamp being turned on, in which said second subcircuit prevents the second half-wave of said alternating current from reaching said lamp,

a third staste, triggered only by said lamp being turned off and continuing thereafter only during said predetermined time interval, in which said second subcircuit resides in an electrical condition that enables it to enter the fourth state when said lamp is switched on, and

a fourth state, triggered only from said third
state by said lamp being turned on, in which said second
subcircuit applies said other half-wave to said lamp,

whereby, after being normally off, for a period
extending beyond said predetermined time interval,
switching on of said lamp is adapted always to cause
said lamp to come on dim at an energy-saving level,

while said lamp can be reliably switched on
bright at the user's choice by switching said lamp off
and within said time interval again switching said lamp
on.

11.  The device of claim 8 or 10
characterized in that
said second subcircuit comprises an element for
controlling the electrical condition of said second
subcircuit, said element having a first mode established
while said lamp is on and continuing for said time
interval after said lamp is switched off, and a second
mode established beginning when said light has been
switched off for said time interval.

12.  The device of claim 11
characterized in that
said element is a capacitative means which is
charged while said lamp is switched on, discharges
beginning when said lamp is switched off, and resides in
said second mode beginning when said charge has fallen
below a predetermined threshold level.

13.  The device of claim 8 or 10
characterized in that
said second subcircuit comprises a controlled
rectifier.

14.   The device of claim 8 or 10
characterized in that
said second subcircuit is connected to apply
full-wave power to said lamp.

15.   The device of claim 8, 9 or 10
characterized in that
said second subcircuit requires substantially
no power for operation.

16.   The device of claim 8, 9 or 10
characterized in that
said lamp is switched on and off by a switch
located remotely from said device.

17.   The device of claim 8, 9 or 10
characterized in that
said lamp is removably mounted in a socket and
said first and second subcircuits are contained in a
unit removably located in a position intermediate
electrically said socket and said light.

# FIG 1

# FIG 1A

# FIG 1B

FIG 2

FIG 2A

FIG 2B

FIG 2C

FIG 3

FIG 3A

FIG 4

FIG 5

FIG 6

FIG 6A

**European Patent Office**

**EUROPEAN SEARCH REPORT**

Application number

EP 83104157.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US - A - 3 733 528 (GILBREATH) <br> * Abstract; fig. 1,4; claims 1-7 * | 1-3, 7-10 | H 05 B 39/02 |
| A | US - A - 3 991 343 (DELPY) <br> * Abstract; fig. 1; claims 1-8 * | 1,7-10 | |

TECHNICAL FIELDS SEARCHED (Int. Cl. 3)

H 05 B 41/00

H 05 B 39/00

The present search report has been drawn up for all claims

| Place of search | Date of completion of the search | Examiner |
|---|---|---|
| VIENNA | 05-08-1983 | VAKIL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82